# EUROPÄISCHE PATENTANMELDUNG

(11) **EP 4 831 036 A1**
(43) Veröffentlichungstag der Anmeldung: **28.10.2026**
(21) Anmeldenummer: 26170974.5
(22) Anmeldetag: 07.04.2026
(51) Int. Cl.: B62D 5/06, B62D 5/07, B62D 5/065

(54) **LENKANORDNUNG FÜR MOBILE ARBEITSMASCHINE, INSBESONDERE KRAN, SOWIE MOBILE ARBEITSMASCHINE MIT EINER SOLCHEN LENKANORDNUNG**

(30) Priorität: 23.04.2025 DE 102025115691
(71) Anmelder: Liebherr-Werk Ehingen GmbH, 89584 Ehingen/Donau (DE)
(72) Erfinder: ENGST, Michael, 89584 Ehingen (DE); MÜNCH, Nikolaus, 72537 Mehrstetten (DE)
(74) Vertreter: Lorenz Seidler Gossel Part. mbB

(57) **Zusammenfassung**

Die Erfindung betrifft eine Lenkanordnung für mobile Arbeitsmaschine, insbesondere Kran, die einen Lenkzylinder zum Bewegen einer Lenkstange, um einen Lenkeinschlag eines Rads der mobilen Arbeitsmaschine zu variieren, eine hydraulische Lenkpumpe zum Zuführen eines Fluids an den Lenkzylinder, und einen Antrieb der hydraulischen Lenkpumpe umfasst. Die Anordnung ist gekennzeichnet durch einen Energiespeicher zum Speichern von elektrischer Energie, wobei der Antrieb der hydraulischen Lenkpumpe ein Elektromotor ist, der mit Energie aus dem Energiespeicher antreibbar ist.

## Beschreibung

Die vorliegende Erfindung betrifft eine Lenkanordnung für eine mobile Arbeitsmaschine, insbesondere einen Kran, sowie eine mobile Arbeitsmaschine, die mit einer solchen Lenkanordnung ausgestattet ist.

Mobile Arbeitsmaschinen, insbesondere Kräne wie Mobilkräne, sind essenziell für Bau-, Transport- und Montagearbeiten und müssen dabei zuverlässig und präzise steuerbar sein. Die Lenkanordnung ist hierbei eine zentrale Komponente, da sie maßgeblich die Fahrtrichtung und damit auch die Positionierung und Manövrierfähigkeit der Arbeitsmaschine bestimmt. Insbesondere in beengten Platzverhältnissen auf Baustellen oder in urbanen Umgebungen kommt der zuverlässigen und präzisen Lenkung große Bedeutung zu.

Lenkanordnungen nach dem Stand der Technik weisen jedoch Nachteile auf, da hierbei üblicherweise die hydraulischen Lenkpumpen mechanisch direkt vom Verbrennungsmotor der Arbeitsmaschine angetrieben werden, indem die Pumpen an einer von dem Verbrennungsmotor angetriebenen Welle angebunden sind. Dies ist insofern nachteilhaft, da hierbei der Motor selbst dann betrieben werden muss, wenn lediglich eine geringe hydraulische Leistung für die Lenkung benötigt wird, beispielsweise beim Lenken im Stand oder bei sehr niedrigen Fahrgeschwindigkeiten. Dadurch entsteht ein unnötig hoher Kraftstoffverbrauch, verbunden mit erhöhten Abgas- und Schallemissionen sowie die Notwendigkeit, den Motor auch dann laufen lassen zu müssen, wenn sich dieser in einem schlechten Arbeitspunkt befindet.

Darüber hinaus bedingt die direkte mechanische Kopplung an den Verbrennungsmotor eine eingeschränkte Platzierung der Lenkpumpe und erschwert somit Wartungs- und Montagearbeiten. Bei Ausfall oder Stillstand des Motors wird gleichzeitig auch die Lenkanlage nicht mehr ausreichend oder gar nicht mehr betrieben, was die Funktionalität der mobilen Arbeitsmaschine negativ beeinflusst. Es könnte das redundante System benötigt werden.

Vor diesem Hintergrund besteht Bedarf an einer Lenkanordnung, welche diese Nachteile vermeidet oder zumindest abmildert und eine gegenüber der herkömmlichen Lenkanordnung verbesserte Lenkanordnung vorschlägt. Dies gelingt mit einer Lenkanordnung nach dem Anspruch 1 bzw. mit einer mobilen Arbeitsmaschine, die eine solche Lenkanordnung aufweist. Vorteilhafte Ausgestaltungen der vorliegenden Erfindung finden sich dabei in den abhängigen Ansprüchen.

Die erfindungsgemäße Lenkanordnung für eine mobile Arbeitsmaschine, insbesondere Kran, umfasst einen Lenkzylinder zum Bewegen einer Lenkstange, um einen Lenkeinschlag eines Rads der mobilen Arbeitsmaschine zu variieren, eine hydraulische Lenkpumpe zum Zuführen eines Fluids an den Lenkzylinder, und einen Antrieb der hydraulischen Lenkpumpe. Die Lenkanordnung ist dadurch gekennzeichnet, dass sie ferner einen Energiespeicher zum Speichern von elektrischer Energie aufweist, wobei der Antrieb der hydraulischen Lenkpumpe ein Elektromotor ist, der mit Energie aus dem Energiespeicher antreibbar ist.

Die wesentliche Funktion der Lenkanordnung besteht darin, über einen hydraulischen Lenkzylinder eine Lenkstange zu bewegen, wodurch der Lenkeinschlag eines oder mehrerer Räder der Arbeitsmaschine präzise eingestellt und verändert werden kann. Dafür wird ein hydraulisches Fluid durch eine hydraulische Lenkpumpe an den Lenkzylinder geliefert.

Das Besondere an dieser Erfindung liegt darin, dass der Antrieb dieser hydraulischen Lenkpumpe nicht wie im bisherigen Stand der Technik mechanisch über den Verbrennungsmotor der Maschine erfolgt, sondern stattdessen ein elektrischer Antrieb vorgesehen ist. Konkret bedeutet dies, dass die hydraulische Lenkpumpe mittels eines Elektromotors angetrieben wird, welcher wiederum elektrische Energie aus einem insbesondere speziell dafür vorgesehenen Energiespeicher erhält.

Die Verwendung eines elektrischen Antriebs der Lenkpumpe bietet dabei mehrere Vorteile. Einer der zentralen Vorzüge besteht in der Möglichkeit, die Lenkanordnung emissionsfrei zu betreiben, insbesondere bei Stillstand oder bei geringen Fahrgeschwindigkeiten, womit der Betrieb eines Verbrennungsmotors, bspw. Dieselmotors, entfällt, der bislang auch im Stand Energie verbrauchte und dabei Abgasemissionen sowie Lärm verursachte. Zudem war ein Betrieb des Verbrennungsmotors im Stand auch dadurch gekennzeichnet, dass dieser in einem schlechten Arbeitspunkt für den Motor erfolgte, was in Bezug auf die Effizienz nachteilhaft war.

Durch die Unabhängigkeit des Lenkpumpenantriebs vom Fahrantrieb wird außerdem erreicht, dass selbst bei ausgeschaltetem oder defektem Fahrantrieb eine uneingeschränkte Lenkfunktion erhalten bleibt, was die Sicherheit und die Einsatzfähigkeit der Maschine erheblich erhöht.

Ein weiterer Vorteil ergibt sich daraus, dass die elektrische Lenkpumpe flexibel im Fahrzeug angeordnet werden kann und nicht mehr zwingend in unmittelbarer Nähe zum Verbrennungsmotor positioniert werden muss, da ein Angreifen an eine durch den Verbrennungsmotor angetriebene Welle nun nicht mehr erforderlich ist. Die Möglichkeit, die Komponenten der Lenkanordnung flexibel anordnen zu können, führt zu einer optimierten Gewichtsverteilung und trägt zur besseren Nutzung des verfügbaren Bauraums innerhalb der mobilen Arbeitsmaschine bei.

Nach einer optionalen Modifikation der vorliegenden Erfindung kann vorgesehen sein, dass die Lenkanordnung ferner einen Gleichstrom-Zwischenkreis umfasst, über den der Elektromotor zum Antreiben der hydraulischen Lenkpumpe und der Energiespeicher miteinander verbunden sind, vorzugsweise wobei zwischen dem Elektromotor und dem Gleichstrom-Zwischenkreis ein Wechselrichter angeordnet ist, um den Gleichstrom in einen Wechselstrom für den Elektromotor zu wandeln.

Die Verwendung eines Gleichstrom-Zwischenkreises optimiert die Energieversorgung des Elektromotors, indem elektrische Energie effizient bereitgestellt und verteilt wird. Der Wechselrichter kann dabei zusätzlich die Betriebseffizienz des Elektromotors durch präzise Steuerung und Anpassung an den benötigten Betriebszustand verbessern.

Nach einer optionalen Modifikation der vorliegenden Erfindung kann vorgesehen sein, dass die Lenkanordnung ferner eine radgetriebene Pumpe umfasst, die dazu ausgelegt ist, in Abhängigkeit einer Rotation eines Rads der mobilen Arbeitsmaschine Fluid an den Lenkzylinder zuzuführen.

Die radgetriebene Pumpe stellt eine zuverlässige Redundanz sicher und trägt dazu bei, dass die Lenkfunktion auch bei Störungen im elektrischen System aufrechterhalten wird. Dies verbessert die Betriebssicherheit und Zuverlässigkeit der Lenkfunktion. Die radgetriebene Pumpe wird also gleichzeitig mit einer Rotation eines Rads der mobilen Arbeitsmaschine angetrieben, sodass während der Fahrt der mobilen Arbeitsmaschine die radgetriebene Pumpe genügend Volumenstrom des Fluids erzeugen kann, um die Lenkung sicherzustellen. Bei geringen Geschwindigkeiten oder im Stillstand kann die radgetriebene Pumpe nicht ausreichend Fluid bereitstellen, um das Lenken zu unterstützen oder auszuführen. Nichtsdestotrotz wird aber dabei verhindert, dass ein Ausfall der elektrischen Pumpe während der Fahrt gleichzeitig auch zu einem Ausfall der Lenkung der mobilen Arbeitsmaschine führt.

Vorzugsweise kann dabei vorgesehen sein, dass die Lenkanordnung dazu ausgelegt ist, bei einem Überschreiten eines vorgegebenen Volumenstrom-Schwellenwerts des Fluids der radgetriebenen Pumpe, den Elektromotor zum Antreiben der hydraulischen Lenkpumpe zu stoppen, um Energie zu sparen, vorzugsweise wobei der Volumenstrom-Schwellenwert eine definierte Fahrgeschwindigkeit der mobilen Arbeitsmaschine ist oder direkt proportional zu einer Fahrgeschwindigkeit der mobilen Arbeitsmaschine ist.

Durch die automatische Abschaltung des Elektromotors bei ausreichendem Fluidvolumenstrom aus der radgetriebenen Pumpe wird unnötiger Energieverbrauch vermieden. Dies reduziert den Energiebedarf der mobilen Arbeitsmaschine und spart Betriebskosten.

Nach einer weiteren optionalen Fortbildung der vorliegenden Erfindung kann vorgesehen sein, dass die Lenkanordnung ferner eine Generatoreinheit umfasst, die dazu dient, den Energiespeicher mit Energie zu versorgen.

Die Generatoreinheit stellt eine konstante und zuverlässige Energieversorgung des Energiespeichers sicher. Dadurch erhöht sich die Betriebsdauer und es verringert sich der Bedarf an externem Aufladen, was die Verfügbarkeit der Maschine verbessert.

Vorzugsweise kann dabei vorgesehen sein, dass die Generatoreinheit an dem Gleichstrom-Zwischenkreis angebunden ist und demnach auch dazu ausgelegt ist, elektrische Energie an den Elektromotor zum Antreiben der hydraulischen Lenkpumpe zu liefern.

Die Integration der Generatoreinheit in den Gleichstrom-Zwischenkreis sorgt für eine effiziente Energieverteilung und ermöglicht die direkte Versorgung des Elektromotors oder von anderen an den Gleichstrom-Zwischenkreis angebundenen Komponenten. Dadurch erhöht sich der Gesamtwirkungsgrad des Systems und es lassen sich Betriebskosten senken.

Nach einer weiteren vorteilhaften Fortbildung der vorliegenden Erfindung kann vorgesehen sein, dass mehrere hydraulische Lenkpumpen vorgesehen sind, deren jeweiliger Antrieb über den Elektromotor erfolgt, und/oder der Elektromotor ein flüssigkeitsgekühlter Elektromotor ist.

Mehrere hydraulische Lenkpumpen erhöhen die Ausfallsicherheit des Lenksystems durch Redundanz. Ein flüssigkeitsgekühlter Elektromotor bietet zudem den Vorteil geringeren Platzbedarfs und besserer thermischer Effizienz, was auch die Langlebigkeit erhöht.

Die Erfindung betrifft darüber hinaus eine mobile Arbeitsmaschine, insbesondere Kran, die eine Lenkanordnung nach einem der vorhergehend diskutierten Aspekte und einen Fahrantrieb zum Antreiben von mindestens einem Rad der mobilen Arbeitsmaschine aufweist, wobei der Fahrantrieb einen Elektromotor und/oder einen Verbrennungsmotor umfasst.

Die Kombination von elektrischem und/oder Verbrennungsmotor ermöglicht vielseitige Einsatzszenarien, von vollelektrischem Betrieb bis hin zum Hybridbetrieb, was Flexibilität in der Anwendung und optimale Anpassung an die Betriebsbedingungen erlaubt.

Als mobile Arbeitsmaschine kommt insbesondere ein Kran wie ein Mobilkran infrage, der über eine Vielzahl von gelenkten Achsen verfügen kann, sodass Ausführungen von einem Mobilkran mit mindestens fünf Achsen, von denen mehr als zwei, bevorzugterweise sogar mehr als drei Achsen gelenkt sein können, beschrieben sind.

Vorzugsweise kann vorgesehen sein, dass die mobile Arbeitsmaschine einen Unterwagen und einen dazu drehbar angeordneten Oberwagen aufweist, und die hydraulische Lenkpumpe und der Elektromotor zum Antreiben der hydraulischen Lenkpumpe in dem Unterwagen angeordnet sind.

Die Platzierung der Lenkpumpe und des Elektromotors im Unterwagen verbessert Gewichtsverteilung und Stabilität der Maschine. Dies erleichtert Wartungsarbeiten und reduziert den Wartungsaufwand insgesamt.

Nach einer weiteren optionalen Modifikation der vorliegenden Erfindung kann vorgesehen sein, dass die mobile Arbeitsmaschine ferner einen elektrischen Lüfter zum Kühlen des Fluids, eines Kühlwassers und/oder einer Ladeluft, einen elektrischen Bremskompressor zum Bereitstellen von Druckluft, um eine Bremse der mobilen Arbeitsmaschine zu betätigen, einen elektrischen Klimakompressor zum Antreiben einer Klimaeinheit, um ein Fahrerhaus der mobilen Arbeitsmaschine zu klimatisieren, ein elektrisches Heizelement zum Heizen des Fahrerhauses der mobilen Arbeitsmaschine, und/oder eine elektrische Kranpumpe zum Antreiben von Kranfunktionen, vorzugsweise wobei der elektrische Lüfter, der elektrische Bremskompressor, der elektrische Klimakompressor, das elektrische Heizelement und/oder die elektrische Kranpumpe an den Gleichstrom-Zwischenkreis angebunden sind, um ihre Energie hierüber zu beziehen.

Elektrische Nebenverbraucher ermöglichen emissionsfreie und energieeffiziente Maschinenfunktionen unabhängig vom Verbrennungsmotor. Dies spart Kraftstoff, reduziert Betriebskosten und erhöht den Bedienkomfort durch konstante Leistungsfähigkeit.

Nach einer weiteren vorteilhaften Fortbildung der vorliegenden Erfindung kann vorgesehen sein, dass dann, wenn der Fahrantrieb einen Verbrennungsmotor umfasst, der Generator an der Brennkraftmaschine verbaut ist, um die zum Betreiben des Elektromotors erforderliche Energie mithilfe des Verbrennungsmotors direkt zu erzeugen.

Ein direkt am Verbrennungsmotor verbauter Generator gewährleistet eine effiziente und sofort verfügbare elektrische Energieversorgung, reduziert Systemkomplexität und verbessert die Gesamteffizienz der Maschine.

Ferner kann nach einer vorteilhaften Fortbildung der vorliegenden Erfindung vorgesehen sein, dass dann, wenn der Fahrantrieb einen Verbrennungsmotor umfasst, der Generator an einer Welle angeordnet ist, die nach einem Schaltgetriebe, also fahrtgeschwindigkeitsabhängig rotiert, um den Energiespeicher nur während einer Fahrt zu laden.

Die Anordnung des Generators am Schaltgetriebe sorgt für effizientes, fahrgeschwindigkeitsabhängiges Laden der Batterie. Im Stand entfällt ein unnötiger Generatorbetrieb, was Kraftstoffverbrauch und Verschleiß reduziert.

Vorteilhafterweise kann vorgesehen sein, dass der Fahrantrieb kein zentraler Fahrantrieb, sondern ein achsenbezogener oder radbezogener Fahrantrieb ist, der mindestens eine Achse oder mindestens ein Rad der mobilen Arbeitsmaschine antreibt.

Ein achsen- oder radbezogener Fahrantrieb reduziert mechanische Komplexität und erhöht die Effizienz, indem verlustreiche Getriebeelemente entfallen und mehr Freiraum für die Gestaltung der Maschine geschaffen wird.

Nach einer weiteren vorteilhaften Modifikation der vorliegenden Erfindung kann vorgesehen sein, dass die hydraulische Lenkpumpe, der Lüfter, der Bremskompressor, der Klimakompressor, das Heizelement und/oder die Kranpumpe von einem Antriebsstrang der mobilen Arbeitsmaschine entkoppelt ist/sind.

Die Entkopplung der Nebenverbraucher vom Antriebsstrang erlaubt deren flexible Positionierung, optimiert die Gewichtsverteilung und reduziert Verluste durch unnötige mechanische Übertragungen, was die Gesamtleistung der Maschine erhöht.

Nach einer optionalen Fortbildung der vorliegenden Erfindung kann vorgesehen sein, dass die hydraulische Lenkpumpe, der Lüfter, der Bremskompressor, der Klimakompressor, das Heizelement und/oder die Kranpumpe als Hochvolt-Komponente/n ausgebildet ist/sind.

Hochvolt-Komponenten ermöglichen kompakte, leistungsstarke Lösungen mit geringeren Stromstärken und somit weniger Platzbedarf. Dies erleichtert Integration und Wartung und verbessert die Systemeffizienz.

Ferner kann vorgesehen sein, dass die hydraulische Lenkpumpe als Konstantpumpe ausgebildet ist, deren Volumenstrom durch eine Drehzahlsteuerung des Elektromotors einstellbar ist.

Die Nutzung von Konstantpumpen mit drehzahlvariablem Elektromotor reduziert Systemkosten, minimiert Bauraumbedarf und erhöht Effizienz gegenüber herkömmlichen volumenstromgeregelten Pumpen.

Nach einer optionalen Fortbildung der vorliegenden Erfindung kann vorgesehen sein, dass die hydraulische Lenkpumpe zusätzlich über eine hydraulische Umschaltung dazu ausgelegt ist, Zylinder einer Abstützung und/oder einer Achsfederung der mobilen Arbeitsmaschine mit Fluid zu versorgen.

Die hydraulische Umschaltung erlaubt eine vielseitige Nutzung der Hydraulikpumpen, was die Anzahl erforderlicher Pumpen reduziert, Kosten senkt und die emissionsfreie Bereitstellung weiterer Funktionen ermöglicht.

Weiter kann nach der vorliegenden Erfindung vorgesehen sein, dass bei einer vollelektrischen Ausführung des Fahrantriebs ohne Schaltgetriebe der Elektromotor des Fahrantriebs in einer zur Vorwärts- und Rückwärtsfahrt jeweils umkehrbaren Drehrichtung betreibbar ist, während die hydraulische Lenkpumpe unabhängig von der Drehrichtung des Elektromotors stets in gleicher Drehrichtung betreibbar ist.

Die Drehrichtungsunabhängigkeit des elektrischen Fahrantriebs reduziert mechanischen Aufwand, vermeidet zusätzliche Getriebe und verbessert die Effizienz und Robustheit des Gesamtsystems.

Vorteilhafterweise kann vorgesehen sein, dass die hydraulische Lenkpumpe unabhängig von einem Betrieb des Fahrantriebs betreibbar ist, sodass der Fahrantrieb bei Stillstand der mobilen Arbeitsmaschine nicht betrieben werden muss, um den für eine Lenkbewegung erforderlichen Volumenstrom bereitzustellen.

Die unabhängige Betriebsfähigkeit der Lenkpumpe vom Fahrantrieb senkt den Kraftstoffverbrauch erheblich, da der Fahrantrieb bei Stillstand nicht betrieben werden muss, und erhöht gleichzeitig die Systemverfügbarkeit.

Vorzugsweise kann vorgesehen sein, dass der Elektromotor zum Antreiben der hydraulischen Lenkpumpe bei höheren Fahrgeschwindigkeiten der mobilen Arbeitsmaschine abschaltbar ist, um Energie zu sparen, während in diesem Betriebszustand der Lenkzylinder ausschließlich über die radgetriebene Pumpe mit Fluid versorgt wird.

Die Möglichkeit, den Elektromotor bei höheren Geschwindigkeiten abzuschalten oder anzuhalten, spart Energie, da die radgetriebene Pumpe ausreichend Fluidversorgung gewährleistet. Dies führt zu effizienterem Betrieb und geringeren Betriebskosten.

Weitere Merkmale, Einzelheiten und Vorteile der Erfindung ergeben sich aus den nachfolgend anhand der Figuren erläuterten Ausführungsbeispielen. Es zeigen:
- Fig. 1a-b:: eine schematische Darstellung einer Lenk- und Antriebsanordnung nach dem Stand der Technik,
- Fig. 2:: eine schematische Darstellung einer Lenk- und Antriebsanordnung nach der Erfindung,
- Fig. 3:: eine schematische Darstellung einer Lenk- und Antriebsanordnung gemäß der Erfindung nach einer weiteren Ausführungsform,
- Fig. 4:: eine Darstellung zur Visualisierung der unterschiedlichen Möglichkeiten zur Umsetzung des Fahrantriebs, und
- Fig. 5:: eine schematische Darstellung der Komponenten und Verbindungen des Hochvoltsystems.

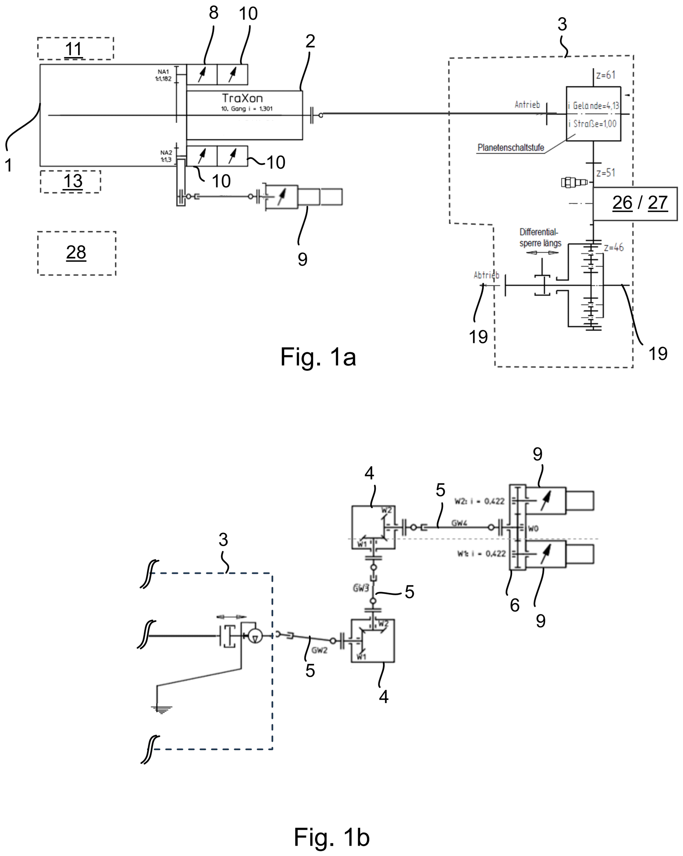

Figur 1a zeigt schematisch den derzeitigen technischen Aufbau eines Lenk- und Antriebssystems für kleinere Mobilkrane mit bis zu fünf Achsen. Der Verbrennungsmotor 1, bspw. ein Dieselmotor, treibt über ein Schaltgetriebe 2 und ein Verteilergetriebe 3 die Fahrzeugachsen an und sorgt so für den Radantrieb 19. Direkt am Verbrennungsmotor 1 sind hydraulische Pumpen, insbesondere Lenkpumpen 10 und die Lüfterpumpe 8 angebracht, welche mechanisch über den Verbrennungsmotor betrieben werden. Der Druckluftkompressor 11 und der Klimakompressor 13 werden ebenfalls direkt über den Dieselmotor angetrieben.

Für die Hydraulikversorgung der Kranfunktionen gibt es zusätzlich Kranpumpen 9, die ebenfalls über den Verbrennungsmotor 1 mittels eines Nebenabtriebs verbunden sind. Diese Kranpumpen 9 können während der Fahrt über eine Kupplung vom Antriebsstrang abgekuppelt werden.

Um eine redundante Lenkfunktion sicherzustellen, insbesondere bei Stillstand des Motors oder in Notfallsituationen, sind zusätzlich radgetriebene Lenkpumpen 26 und eine radgetriebene Zentrierpumpe 27 verbaut, die mechanisch vom Radantrieb 19 angetrieben werden. Dieser Aufbau repräsentiert den aktuellen Standard bei kleineren mobilen Arbeitsmaschinen und ist dadurch charakterisiert, dass die hydraulischen Verbraucher mechanisch direkt vom Verbrennungsmotor angetrieben und somit permanent mitgeführt werden, was insbesondere bei Stillstand und niedrigen Fahrgeschwindigkeiten zu erhöhtem Energieverbrauch führt.

Figur 1b zeigt die zusätzlich zu Fig. 1a notwendigen Komponenten für ein Lenk- und Antriebssystem für größere Mobilkrane mit mindestens fünf Achsen, bei welcher im Unterschied zu Fig. 1a die Kranpumpen nicht über einen direkten Nebenabtrieb, sondern über eine mechanische Verbindung mittels Gelenkwelle 5, Winkelgetriebe 4 und Pumpenverteilergetriebe 6 vom Verbrennungsmotor 1 angetrieben sind. Dadurch befinden sich die Kranpumpen 9 nicht im Unterwagen, sondern sind im Oberwagen. Diese Anordnung erlaubt, höhere hydraulische Leistungen für umfangreichere Kranfunktionen bereitzustellen, wie sie bei größeren Mobilkranen erforderlich sind. Alle anderen hydraulischen Pumpen und Nebenaggregate wie Lenkpumpen 10, Lüfterpumpe 8, Klimakompressor 13 und Druckluftkompressor 11 bleiben an ihrem Einsatzort.

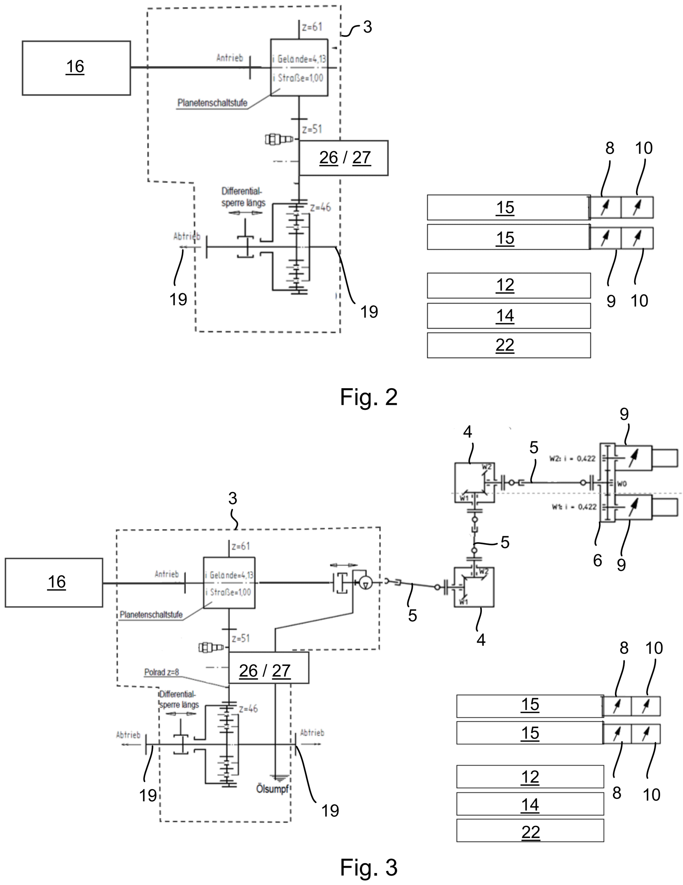

Figur 2 zeigt das erfindungsgemäße elektrifizierte Lenk- und Antriebssystem für kleinere Mobilkrane bis zu fünf Achsen. Im Unterschied zum herkömmlichen Antrieb erfolgt die Versorgung der hydraulischen Verbraucher wie Lenkpumpen 10, Lüfterpumpe 8 und Kranpumpen 9 hier über spezielle Hochvolt-Pumpenelektromotoren 15 (= HV-Pumpenelektromotoren), die unabhängig vom Verbrennungsmotor 1 arbeiten. Diese Elektromotoren 15 werden über einen HV-Zwischenkreis 25 versorgt. Dadurch können einzelne Pumpen je nach Bedarf ein- oder abgeschaltet werden, wodurch unnötiger Energieverbrauch bei verschiedenen Betriebssituationen vermieden wird.

Zusätzlich sind radgetriebene Lenkpumpen 26 sowie eine radgetriebene Zentrierpumpe 27 vorgesehen, um bei einem Ausfall der elektrischen Systeme die Lenkfähigkeit weiterhin sicherzustellen.

Der Fahrantrieb 16 kann mithilfe einer Brennkraftmaschine und/oder einem Elektromotor versehen sein und kann genau wie die HV- Pumpenelektromotoren 15 mit ihren angebauten Hydraulikpumpen 8, 10 im Unterwagen einer mobilen Arbeitsmaschine angeordnet sein.

Weiter kann der herkömmlicherweise am Verbrennungsmotor 1 verbaute Klimakompressor 13 durch einen HV-Klimakompressor 14 ersetzt werden, sodass auch bei Stillstand des Verbrennungsmotors eine Kühlung des Fahrerhauses möglich ist. Eine Heizung des Fahrerhauses kann über ein HV-Heizelement umgesetzt sein. Ein Druckluftkompressor 12 kann ebenfalls mithilfe einer Hochvoltspannung betrieben werden.

Figur 3 beschreibt das elektrifizierte Lenk- und Antriebssystem speziell für größere Mobilkrane mit mindestens fünf Achsen. Auch hier erfolgt die Versorgung der Nebenverbraucher wie Lenkpumpen 10 und Lüfterpumpe 8 elektrisch durch HV-Pumpenelektromotoren 15. Jedoch werden in diesem Fall die Kranpumpen 9 weiterhin mechanisch über eine Gelenkwelle 5, ein Winkelgetriebe 4 und ein Pumpenverteilergetriebe 6 vom Verbrennungsmotor 1 versorgt. Ein besonderer Vorteil liegt darin, dass die HV-Pumpenelektromotoren 15 im Unterwagen während des Kranbetriebs komplett abgeschaltet werden können, wodurch unnötiger Energieverbrauch reduziert wird.

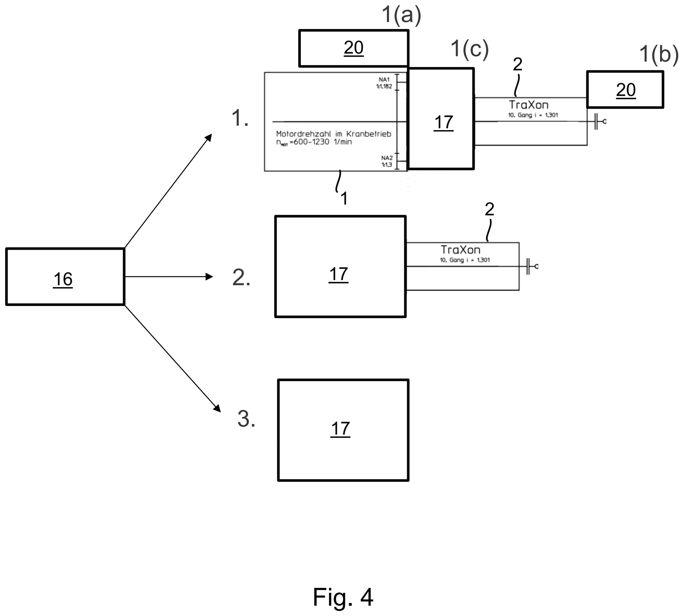

Figur 4 illustriert drei Varianten des hybriden bzw. vollelektrischen Fahrantriebs. Variante 1 zeigt den Hybridantrieb, der einen Verbrennungsmotor 1 mit einem HV-Elektromotor 17 kombiniert. Dabei existieren drei Möglichkeiten, elektrische Energie bereitzustellen: Bei Variante 1a ist ein HV-Generator 20 direkt am Verbrennungsmotor angebracht, Variante 1b verwendet einen fahrgeschwindigkeitsabhängigen Generator nach dem Schaltgetriebe 2, und Variante 1c nutzt den HV-Fahrmotor 17 selbst als Generator beim Bremsen oder Rollen.

Variante 2 zeigt einen rein elektrischen Antrieb, der aber weiterhin ein Schaltgetriebe nutzt, während Variante 3 den vollelektrischen Antrieb ohne Schaltgetriebe zeigt, bei dem der HV-Elektromotor 17 direkt an Achse oder Rädern 19 angreift, was die Konstruktion deutlich vereinfacht und eine Richtungsumkehr ohne mechanisches Getriebe ermöglicht.

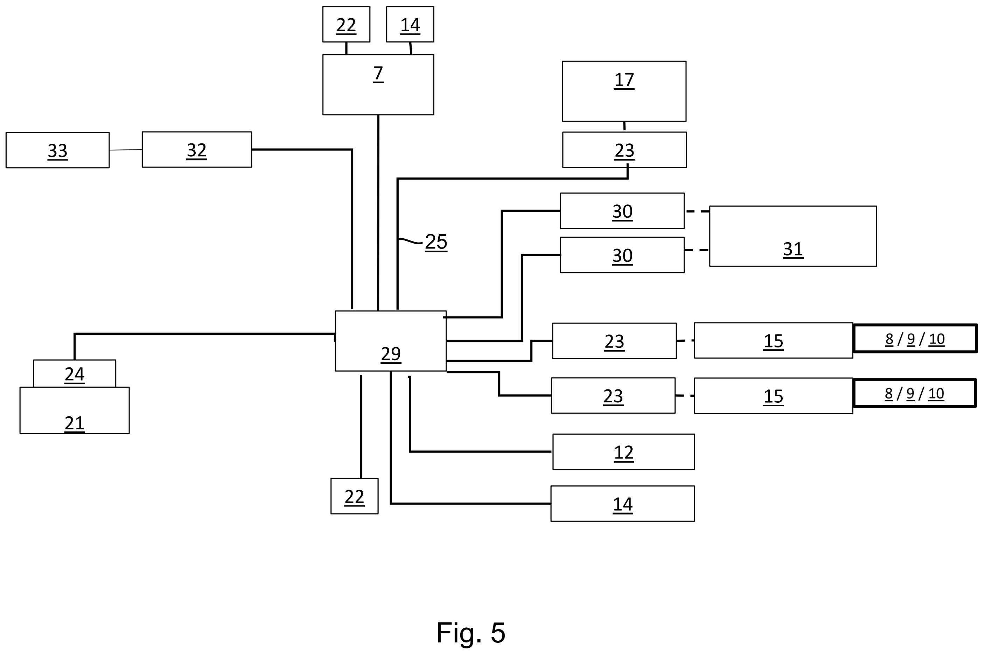

Figur 5 stellt das elektrische Hochvolt-System und dessen Komponenten dar. Hier werden HV-Pumpenelektromotoren 15 über einen Wechselrichter 23 aus einem DC-Zwischenkreis 25 versorgt, welcher von einer HV-Batterie 21 gespeist und über ein DC-Schütz 24 geschaltet wird. Die elektrischen Nebenaggregate wie HV-Druckluftkompressor 12, HV-Klimakompressor 14 und HV-Heizung 22 sind ebenfalls direkt an diesen Zwischenkreis 25 angeschlossen und können unabhängig vom Verbrennungsmotor 1 betrieben werden. Optional steht im Hybridbetrieb zusätzlich ein HV-Generator 20 zur Verfügung, der die HV-Batterie 21 während der Fahrt lädt.

Dieses Konzept erlaubt eine vollständige elektrische Entkopplung der Verbraucher vom Verbrennungsmotor 1 und somit einen emissionsarmen und energieeffizienten Betrieb.

Mit dem Bezugszeichen 31 ist eine externe Stromversorgung gekennzeichnet, mithilfe derer über ein Akku-Ladegerät 30 die Batterie 21 geladen werden kann. Weiter ist es auch möglich, das Bordnetz 33 über einen DC/DC-Wandler 32 an den Zwischenkreis 25 anzubinden und somit mit Energie zu versorgen. Das Bezugszeichen 7 beschreibt einen Schleifringübertrager, der es erlaubt, den Zwischenkreis 25 zwischen Oberwagen und Unterwagen einer mobilen Arbeitsmaschine vorzusehen.

In der Darstellung mit dicken Strichen ist dabei der Zwischenkreis 25 dargestellt, der Spannung in einem Hochvolt-Bereich führt. Das Bordnetz wird in einer Spannung von typischerweise 24 V oder 48 V betrieben, sodass hier ein dünner Strich zur Darstellung verwendet wird. Gestrichelt ausgeführt ist eine Wechselspannung, also bspw. zwischen dem Wechselrichter 23 und dem HV-Elektromotor 17, zum Akku-Ladegerät 30 oder zu den jeweiligen HV-Pumpenelektromotoren 15.

### Bezugszeichenliste:

- 1: Verbrennungsmotor
- 2: Schaltgetriebe
- 3: Verteilergetriebe
- 4: Winkelgetriebe
- 5: Gelenkwelle
- 6: Pumpenverteilergetriebe
- 7: Schleifringüberträger
- 8: Lüfterpumpe
- 9: Kranpumpen
- 10: Lenkpumpen
- 11: Druckluftkompressor
- 12: HV-Druckluftkompressor
- 13: Klimakompressor
- 14: HV-Klimakompressor
- 15: HV-Pumpenelektromotor
- 16: Fahrantrieb
- 17: HV-Elektromotor / elektrischer Fahrantrieb
- 19: Radantrieb
- 20: HV-Generator
- 21: HV-Batterie
- 22: HV-Heizung
- 23: Wechselrichter
- 24: DC-Schütz
- 25: DC Zwischenkreis
- 26: radgetriebene Lenkpumpen
- 27: radgetriebene Zentrierpumpe
- 28: kraftstoffbetriebene Zusatzheizung
- 29: HV-Verteilerbox
- 30: Akku-Ladegerät
- 31: externe Stromversorgung
- 32: DC-DC-Wandler
- 33: Bordnetz

## Patentansprüche

1. Lenkanordnung für mobile Arbeitsmaschine, insbesondere Kran, umfassend:
einen Lenkzylinder zum Bewegen einer Lenkstange, um einen Lenkeinschlag eines Rads der mobilen Arbeitsmaschine zu variieren,
eine hydraulische Lenkpumpe zum Zuführen eines Fluids an den Lenkzylinder, und
einen Antrieb der hydraulischen Lenkpumpe,
**gekennzeichnet durch**
einen Energiespeicher zum Speichern von elektrischer Energie, wobei
der Antrieb der hydraulischen Lenkpumpe ein Elektromotor ist, der mit Energie aus dem Energiespeicher antreibbar ist.

2. Lenkanordnung nach dem vorhergehenden Anspruch 1, ferner umfassend einen Gleichstrom-Zwischenkreis über den der Elektromotor zum Antreiben der hydraulischen Lenkpumpe und der Energiespeicher miteinander verbunden sind, vorzugsweise wobei zwischen dem Elektromotor und dem Gleichstrom-Zwischenkreis ein Wechselrichter angeordnet ist, um den Gleichstrom in einen Wechselstrom für den Elektromotor zu wandeln.

3. Lenkanordnung nach einem der vorhergehenden Ansprüche, ferner umfassend eine radgetriebene Pumpe, die dazu ausgelegt ist, in Abhängigkeit einer Rotation eines Rads der mobilen Arbeitsmaschine Fluid an den Lenkzylinder zuzuführen.

4. Lenkanordnung nach dem vorhergehenden Anspruch 3, wobei die Lenkanordnung dazu ausgelegt ist, bei einem Überschreiten eines vorgegebenen Volumenstrom-Schwellenwerts des Fluids der radgetriebenen Pumpe den Elektromotor zum Antreiben der hydraulischen Lenkpumpe zu stoppen, um Energie zu sparen, vorzugsweise wobei der Volumenstrom-Schwellenwert direkt proportional zu einer oder eine definierte Fahrgeschwindigkeit der mobilen Arbeitsmaschine ist.

5. Lenkanordnung nach einem der vorhergehenden Ansprüche, ferner umfassend eine Generatoreinheit, die dazu dient, den Energiespeicher mit Energie zu versorgen.

6. Lenkanordnung nach dem vorhergehenden Anspruch 5, fortgebildet mit den Merkmalen des Anspruchs 2, wobei die Generatoreinheit an dem Gleichstrom-Zwischenkreis angebunden ist und demnach auch dazu ausgelegt ist, elektrische Energie an den Elektromotor zum Antreiben der hydraulischen Lenkpumpe zu liefern.

7. Lenkanordnung nach einem der vorhergehenden Ansprüche, wobei
mehrere hydraulische Lenkpumpen vorgesehen sind, deren jeweiliger Antrieb über den Elektromotor erfolgt, und/oder
der Elektromotor ein flüssigkeitsgekühlter Elektromotor ist.

8. Mobile Arbeitsmaschine, insbesondere Kran, umfassend:
eine Lenkanordnung nach einem der vorhergehenden Ansprüche,
einen Fahrantrieb zum Antreiben von mindestens einem Rad der mobilen Arbeitsmaschine, wobei
der Fahrantrieb einen Elektromotor und/oder einen Verbrennungsmotor umfasst.

9. Mobile Arbeitsmaschine nach dem vorhergehenden Anspruch 8, wobei
die mobile Arbeitsmaschine einen Unterwagen und einen dazu drehbar angeordneten Oberwagen aufweist, und
die hydraulische Lenkpumpe und der Elektromotor zum Antreiben der hydraulischen Lenkpumpe in dem Unterwagen angeordnet sind.

10. Mobile Arbeitsmaschine nach einem der vorhergehenden Ansprüche 8 oder 9, ferner umfassend:
einen elektrischen Lüfter zum Kühlen des Fluids, eines Kühlwassers und/oder einer Ladeluft,
einen elektrischen Bremskompressor zum Bereitstellen von Druckluft, um eine Bremse der mobilen Arbeitsmaschine zu betätigen,
einen elektrischen Klimakompressor zum Antreiben einer Klimaeinheit, um ein Fahrerhaus der mobilen Arbeitsmaschine zu klimatisieren,
ein elektrisches Heizelement zum Heizen des Fahrerhauses der mobilen Arbeitsmaschine, und/oder
eine elektrische Kranpumpe zum Antreiben von Kranfunktionen, vorzugsweise wobei
der elektrische Lüfter, der elektrische Bremskompressor, der elektrische Klimakompressor, das elektrische Heizelement und/oder die elektrische Kranpumpe an den Gleichstrom-Zwischenkreis angebunden sind, um ihre Energie hierüber zu beziehen.

11. Mobile Arbeitsmaschine nach einem der vorhergehenden Ansprüche 8-10, fortgebildet mit den Merkmalen des Anspruchs 5, wobei dann, wenn der Fahrantrieb einen Verbrennungsmotor umfasst, der Generator an der Brennkraftmaschine verbaut ist, um die zum Betreiben des Elektromotors erforderliche Energie mithilfe des Verbrennungsmotors direkt zu erzeugen.

12. Mobile Arbeitsmaschine nach einem der vorhergehenden Ansprüche 8-10, fortgebildet mit den Merkmalen des Anspruchs 5, wobei dann, wenn der Fahrantrieb einen Verbrennungsmotor umfasst, der Generator an einer Welle angeordnet ist, die nach einem Schaltgetriebe, also fahrtgeschwindigkeitsabhängig rotiert, um den Energiespeicher nur während einer Fahrt zu laden.

13. Mobile Arbeitsmaschine nach einem der vorhergehenden Ansprüche 8-12, wobei der Fahrantrieb kein zentraler Fahrantrieb, sondern ein achsenbezogener oder radbezogener Fahrantrieb ist, der mindestens eine Achse oder mindestens ein Rad der mobilen Arbeitsmaschine antreibt.

14. Mobile Arbeitsmaschine nach einem der vorhergehenden Ansprüche 8-13, fortgebildet mit den Merkmalen des Anspruchs 10, wobei die hydraulische Lenkpumpe, der Lüfter, der Bremskompressor, der Klimakompressor, das Heizelement und/oder die Kranpumpe von einem Antriebsstrang der mobilen Arbeitsmaschine entkoppelt ist/sind.

15. Mobile Arbeitsmaschine nach einem der vorhergehenden Ansprüche 8-13, fortgebildet mit den Merkmalen des Anspruchs 10, wobei die hydraulische Lenkpumpe, der Lüfter, der Bremskompressor, der Klimakompressor, das Heizelement und/oder die Kranpumpe als Hochvolt-Komponente/n ausgebildet ist/sind.
